# NEUE EUROPÄISCHE PATENTSCHRIFT

(11) **EP 0 843 960 B2**
(45) Veröffentlichungstag und Bekanntmachung des Hinweises auf die Entscheidung über den Einspruch: **18.05.2005**
(45) Hinweis auf die Patenterteilung: 21.11.2001
(21) Anmeldenummer: 97114169.2
(22) Anmeldetag: 16.08.1997
(51) Int. Cl.: A01D 43/06, B65G 67/22

(54) **Vorrichtung zur Überwachung der Überladung von Gütern einer Arbeitsmaschine in einem Transportfahrzeug**
Device for controlling the overloading of goods of a working machine in a transport vehicle
Dispositif pour contrôler le transbordement de marchandises d'une machine de travail à un véhicule de transport

(30) Priorität: 16.11.1996 DE 19647522
(43) Veröffentlichungstag der Anmeldung: 27.05.1998
(73) Patentinhaber: CLAAS KGaA, 33428 Harsewinkel (DE)
(72) Erfinder: Behnke, Willi, 33803 Steinhagen (DE); Isfort, Heinrich, 48249 Dülmen (DE); Diekhans, Norbert, Dr., 33335 Gütersloh (DE)

(56) Entgegenhaltungen:
- EP-A- 0 477 101
- EP-A- 0 529 933
- EP-A- 0 666 018
- EP-A- 0 760 202
- DD-A- 155 157
- DE-A- 1 555 360
- DE-A- 4 304 005
- DE-A- 4 426 059
- DE-A- 19 500 516
- DE-C- 4 341 834
- GB-A- 2 073 914
- JP-A- 60 190 041
- US-A- 5 568 192
- US-A- 5 583 569

## Beschreibung

Die Erfindung betrifft eine Arbeitsmaschine mit einer Vorrichtung zur Überwachung des Überladens von Gütern von der Arbeitsmaschine auf ein Transportfahrzeug, insbesondere das Überladen durch eine landwirtschaftliche Erntemaschine, wobei die Arbeitsmaschine mit einer Überladevorrichtung versehen ist und der Überladevorrichtung eine analoge Überwachungskamera zugeordnet ist, die den Überladevorgang filmt und deren Anzeige durch einen im Fahrstand der Arbeitsmaschine angebrachten Kontrollmonitor erfolgt.

Eine solche Vorrichtung ist beispielsweise aus der DE 44 26 059 für einen selbstfahrenden Feldhäcksler bekannt. Sie ermöglicht dem Fahrer über einen im Fahrerhaus angebrachten Monitor eine ständige Kontrolle über die Befüllung eines von einem Traktor gezogenen Anhängers mit Häckselgut. Dabei ist der Monitor so im Blickfeld des Fahrers angeordnet, daß dieser auch das seiner Maschine vorausliegende Feld beobachten kann, ohne den Kopf wenden zu müssen. Allerdings muß jedoch ein separater Videomonitor installiert werden, der das von der Videokamera übermittelte Bild anzeigt. Der zusätzliche Anzeigemonitor verursacht jedoch zusätzliche Kosten, schränkt die Bewegungsfreiheit in der Kabine ein und beeinträchtigt die Sicht nach draußen. Der Fahrer des Feldhäckslers kann die Beladung des begleitenden Anhängers durch eine Veränderung seiner Fahrgeschwindigkeit und/oder durch eine Verstellung des Auswurfkrümmers bzw. der Auswurfklappe beeinflussen. Über das tatsächliche Fassungsvermögen des Anhängers, dessen erlaubter Zuladung und dem aufgrund der Befüllung erreichten Gesamtgewicht des Transportfahrzeuges kann der Fahrer der Erntemaschine jedoch keine genaue Aussage machen, da er dessen Tragfähigkeit nicht kennt, zumal während eines Ernteeinsatzes mehrere Transportfahrzeuge zum Einsatz kommen. Die eigentliche Verantwortung für den Beladezustand des Transportfahrzeuges hat, insbesondere wenn es auf öffentlichen Straßen und Wegen auf seiner Fahrt zum Silo eingesetzt wird, der Fahrer des Transportfahrzeuges selbst. Dieser ist daher einerseits stets bemüht, daß das Transportfahrzeug auch gleichmäßig verteilt und nur bis zur oberen Grenze des zulässigen Gesamtgewichts beladen wird. Zu diesem Zweck muß sich der Fahrer sehr häufig nach hinten umsehen, wodurch dieser, insbesondere bei längerem Einsatz, schnell überfordert ist, da ja der Fahrer außerdem streng darauf achten muß, daß das von ihm geführte Fahrzeug nicht mit der Erntemaschine kollidiert.

In der DE 1 555360 ist eine landwirtschaftliche Zugmaschine oder ein Baufahrzeug beschrieben, in der der Fahrer einer Zugmaschine über eine Videoanlage Arbeitsgeräte in ihrer Funktion überwachen kann. Auch in den Zeichnungen dieser Schrift ist ein zusätzlich in der Kabine montierter Kontrollmonitor erkennbar. Die Steuerung von Überladevorgängen ist in dieser Schrift nicht näher erläutert.

In der Schrift DD 155 157 ist eine Positioniereinrichtung zwischen Erntemaschinen und Transportfahrzeugen beschrieben. Zur Vermeidung von Kollisionen und Übergabeverlusten ist vorgesehen, sowohl die relative Position der Fahrzeuge zueinander zu ermitteln und anzuzeigen als auch die Übergabeelemente zu steuern. Die beschriebene Positioniereinrichtung ist jedoch sehr aufwendig, weil eine Vielzahl von Einzelkomponenten erforderlich sind.

Insgesamt weisen alle aus dem Stand der Technik bekannten Vorrichtungen den Nachteil auf, daß sie mit veralteter Analogtechnik arbeiten, die langsam, teuer und aufwendig zu installieren ist und auch nicht mehr in die zunehmend mit Digitaltechnik arbeitenden Bordelektroniksysteme von Arbeitsmaschinen und Transportfahrzeugen paßt.

Der vorliegenden Erfindung liegt daher die Aufgabe zugrunde, die eingangs näher bezeichnete Vorrichtung so abzuändern, daß sie in eine digitale Bedienelektronik integrierbar ist, wobei die Überwachungsvorrichtung in weiterer Ausgestaltung der Erfindung dabei möglichst von mehreren Fahrern von Arbeitsmaschinen und Transportfahrzeugen nutzbar sein sollte.

Die erfindungsgemäße Aufgabe wird von einer Vorrichtung mit den kennzeichnenden Merkmalen des Anspruch 1 gelöst. In bevorzugter Ausführung sollte die digital arbeitende Graphikanzeige zumindest auch Betriebs- und/oder Kontrolldaten der Arbeitsmaschine anzeigen können. Dabei spielt es keine Rolle, ob die Graphikanzeige dabei schwarz-weiß oder farbig arbeitet. Der Decoder kann auch in einem der Graphikanzeige zugeordneten Mikroprozessor enthalten sein, sodaß zunächst ein analoges Videosignal an den der Graphikanzeige zugeordneten Mikroprosessor übertragen wird, oder es wird ein digitalisertes Videosignal übertragen, das nochmals vom der Graphikanzeige zugeordneten Mikroprozessor in ein Format übertragen wird, das für die Graphikanzeige verwertbar ist. Maßgeblich ist letztendlich, ein Videosignal zu erzeugen, das in seinem digitaliserten Format eine brauchbare Darstellung auf der digital arbeitenden Graphikanzeige ermöglicht. Durch das Digitalisieren des Videosignals der Überwachungskamera ist es möglich, das von der Überwachungskamera aufgenommen Videobild ganz oder auschnittweise in Fenstern in serienmäßig auf der Arbeitsmaschine vorhandene Graphik- bzw. Bedienanzeigen, deren Anzeige in Bildform von einem Computer beispielsweise auf Flüssigkristallbildschirmen generiert wird, anzuzeigen. In weiterer bevorzugter Ausgestaltung ist die Überwachungskamera über einen Mikroprozessor an ein CAN-Busnetz oder ein Hochgeschwindigkeits-Bussystem der Arbeitsmaschine angeschlossen und übermittelt die Videobilddaten über das CAN-Busnetz bzw. Hochgeschwindigkeits-Bussystem an den an anderer Stelle plazierten Decoder, den der Bedienanzeige zugeordneten Mikroprozessor oder die Bedienanzeige direkt. Durch die erfindungsgemäße Vorrichtung werden besondere Anzeigebildschirme für das Videobild überflüssig, und der Anzeigebildschirm braucht nicht aufwendig separat verkabelt zu werden. Eine solche Überwachungsvorrichtung ist auch leicht in eine digital arbeitende Bordelektronik integrierbar. Der Fahrer wird entlastet, weil er nicht zusätzlich zum vorausliegenden Arbeitsfeld mehrere Bildschirme, sondern nur noch einen Bildschirm zu beobachten braucht, in dem gemeinsam das Videobild und wichtige Maschinendaten und Arbeitsparameter der Arbeitsmaschine angezeigt werden. Außerdem wird sein Sichtfeld nicht durch behindernde Zusatzmonitore eingeschränkt. Die vorgeschlagene Vorrichtung läßt sich in verschiedenen Arbeitsmaschinen einsetzen, bei denen Güter auf Transportfahrzeuge übergeben werden müssen, wie beispielsweise bei landwirtschaftlichen Erntemaschinen in Form von Feldhäckslern, Mähdreschern, Zuckerrübenerntern, oder bei Baumaschinen wie Asphaltfräsen oder auch Teermaschinen, bei denen die Arbeitsmaschine allerdings Material vom Transportfahrzeug überladen bekommt. Die erfindungsgemäße Vorrichtung kann jedoch in gleicher Weise bei einem solchen entgegengesetzten Überladevorgang eingesetzt werden. Unter dem Begriff Überladevorrichtung sind alle technisch bekannten Überlademittel zu verstehen, also nicht nur Korntankentleerrohre mit integrierten Förderschnecken, Auswurfkrümmer bei Feldhäckslern oder Stabkettenförderer bei Zuckerrohrerntemaschinen, sondern auch Bandförderer, Löffelförderer, Blasförderer und sonstige Fördermittel.

In bevorzugter Ausgestaltung der Erfindung überträgt der Decoder das analoge Videosignal der Überwachungskamera in ein Standardformat auf der Basis eines digitalen Parallelbusses eines Bordcomputers. Bevorzugt ist der digitale Parallelbus ein sogenannter PCMCIA-Anschluß, der die Nutzung von kostengünstigen PC-Standardkomponenten ermöglicht. Für die Anzeige des digitalisierten Videosignals auf der Graphikanzeige kann die Fenstertechnik genutzt werden. Das bedeutet, daß das verfügbare Anzeigefeld der Graphikanzeige in Teilbereiche aufgeteilt ist, denen jeweils eine besondere Anzeigefunktion zugeordnet ist. Neben dem Fenster für das Videosignal können beispielsweise zusätzliche Fenster vorgesehen sein, die Motordaten der Arbeitsmaschine wie Drehzahl, Öl- und Kühlwasser-Temperaturen, Einstellmaße von Arbeitswerkzeugen der Arbeitsmaschine wie Arbeitshöhe, Schnittlänge, Drehzahlen, Auftragsdaten des gegenwärtig bearbeiteten Auftrags wie bearbeitete oder zu bearbeitende Fläche, überladene Gutmenge, Arbeitszeiten, zurückgelegter und zurückzulegender Fahrweg etc. mit Uhrensymbolen, Pictogrammen, Zahlenausgaben etc. anzeigen. Es können auch mehrere Fenster für Videosignale vorgesehen sein, wenn mehrere Überwachungskameras installiert sind, oder ein Videobildfenster kann nach Wahl des Fahrers der Arbeitsmaschine mit einem der Videobilder der mehreren Überwachungskameras ausgefüllt werden. Es kann sinnvoll sein, mehrere Überwachungskameras auf einer Arbeitsmaschine zu installieren, wenn nicht nur der Überladevorgang, sondern auch andere Funktionen, die nur mit höherem Aufwand optisch überwacht werden können, vom Fahrer der Arbeitsmaschine überwacht werden müssen, wie beispielsweise, einen korrekten seitlichen Abstand zu anderen Fahrzeugen einzuhalten, den Raum hinter der Arbeitsmaschine beim Rückwärtsfahren oder An- bzw. Abkuppeln von Anhängern zu überwachen, das Arbeitsergebnis von Arbeitswerkzeugen der Arbeitsmaschine zu beobachten oder mit den Arbeitswerkzeugen einer Bearbeitungskante zu folgen. Für solche Anwendungen läßt sich die vorgeschlagene Vorrichtung und das Verfahren äquivalent einsetzen.

Ein Nebeneinander der Anzeige von Videobildern und Sensor- und/oder Betriebsdaten der Arbeitsmaschine auf einer Graphikanzeige ist besonders dann störungsfrei möglich, wenn das Computerelement, das die Graphikanzeige ansteuert, über eine standardisierte Schnittstelle verfügt, über die alle anzuzeigenden Daten und Bilder übermittelt werden. Das Computerelement kann dann softwaregesteuert die einzelnen Anzeigefelder zu einem Anzeigebild kombinieren, das das Anzeigefeld der Anzeigeeinrichtung voll ausfüllt. Außerdem kann das Computerelement softwaregesteuert Änderungen oder Ergänzungen des Anzeigebildes vornehmen, die über die bloße Anzeige der übermittelten Videosignale oder Sensorsignale hinausgeht. So ist vorstellbar, daß einzelne Betriebs- oder Sensordaten der Arbeitsmaschine oder Interpretationshilfen zum Videobild wie beispielsweise Richtungspfeile, die die Hauptförderrichtung der überladenen Güter anzeigen oder Grenzlinien, innerhalb derer ein verlustfreies Überladen möglich ist, in das Videobild eingespielt werden, oder Warnmeldungen bei Erreichen oder Überschreiten von Grenzwerten in das Bild eingeblendet werden.

Da ein CAN-Busnetz oder ein Hochgeschwindigkeits-Bussystem nur über beschränkte Datenübertragungskapazitäten verfügt, kann es vorteilhaft sein, die Videobildsignale nicht über das (CAN-) Busnetz, sondern direkt an die die Anzeige ausgebenden Mikroprozessoren zu übertragen. Dazu können die analogen oder digitalen Videosignale der Überwachungskamera an einen in den Mikroprozessor M1 oder M3 direkt angeschlossenen oder integrierten Mikroprozessor M2 und/oder den Mikroprozessor M4 übertragbar sein.

Außerdem ergibt sich der Vorteil, daß die digital vorliegenden Videobilder leicht über Telekommunikationsmittel abfragbar und übertragbar, von einer Bilderkennungssoftware weiterverarbeitbar und die Bildsignale mitweiteren digitalen Informationen wie beispielsweise über bestimmte Last- oder Schaltzustände der Arbeitsmaschine verbindbar sind. Um ein Videobild zur Kontrolle der Überladung von der Arbeitsmaschine auf ein Transportfahrzeug übertragen zu können, ist es erforderlich, daß die Bordelektronik der Arbeitsmaschine die digitalisierten Videosignale über Telekommunikationsmittel an eines oder mehrere der Transportfahrzeuge übermittelt, die Telekommunikationsmittel eines Transportfahrzeugs die digitalisierten Videosignale der Bordelektronik bereitstellen und die Anzeige der digitalisierten Videosignale auf einer digital arbeitenden Graphikanzeige des Transportfahrzeugs erfolgt. Die Überwachungsvorrichtung auf einem Transportfahrzeug kann natürlich entsprechend der vorbeschriebenen Auslegung für eine Arbeitsmaschine aufgebaut sein und dementsprechend beispielsweise die digitalen Videosignale von der Telekommunikationseinheit über ein CAN-Busnetz auf eine Graphikanzeige übertragen und dort dann in einem Fenster anzeigen oder der digitale Parallelbus auf dem Transportfahrzeug kann ein sogenannter PCMCIA-Anschluß sein. Als Transportfahrzeug kommt beispielsweise ein Ackerschlepper mit einem oder mehreren angehängten Anhängern, eine LKW-Zugmaschine als Sattelschlepper mit einem angehängten Aufliegeranhänger oder sonstige Transportfahrzeuge in Betracht. Als Graphikanzeige können entweder LCD-Bildschirme genutzt werden, die bereits serienmäßig im Bordnetz des Ackerschleppers oder des LKW installiert sind, oder es werden tragbare Bordcomputer angesteuert, die neuerdings für landwirtschaftliche Anwendungen zur Steuerung von angehängten Geräten auf Basis des genormten landwirtschaftlichen Bussystems genutzt werden und lösbar mit dem Ackerschlepper verbunden sind. Die tragbaren Bordcomputerverfügen teilweise auch schon über ein Telekommunikationsmodul, sodaß sie sich in besonderer Weise für die Kommunikation mit der Arbeitsmaschine eignen. So kann auch der Fahrerstand des Transportfahrzeugs die digitalisierten Videobilder über Telekommunikationsmittel auf einen vorhandenen Bedienbildschirm übertragen bekommen, wahlweise auch mit Informationen über Ein- und Ausschalten der Arbeitsorgane derArbeitsmaschine und/oder der Übergabeelemente, Lenkbewegungen der Arbeitsmaschine insgesamt und/oder Schwenkbewegungungen der Übergabeelemente, der Fahrgeschwindigkeit der Arbeitsmaschine und/oder Sensordaten zur Beschaffenheit der überladenen Güter, wie beispielsweise deren Gewicht, Feuchtigkeit, Chargen- oder Auftragsnummer, Transportdestination, etc. Für die Aufarbeitung der Videosignale der Überwachungskamera zur Anzeige auf dem Transportfahrzeug gilt das vorstehend zur Anzeige auf der Arbeitsmaschine ausgeführte entsprechend. Auch kann vorgesehen sein, daß die Bedienelektronik des Transportfahrzeugs über Eingabemittel wie beispielsweise einen Touchscreen-Bildschirm mit graphischer Benutzeroberfläche oder eine Tastatur verfügt, von denen 'aus die Stellbefehle des Fahrers des Transportfahrzeugs an die Übergabevorrichtung der Arbeitsmaschine mithilfe der Telekommunikationsmittel an die Bordelektronik der Arbeitsmaschine zur Ausführung übertragbar sind. Wenn die Vorgabe der Stellbefehle für die Übergabevorrichtung der Arbeitsmaschine an den Fahrer eines Transportfahrzeugs übertragen ist, ist die Anzeige eines Videosignals auf einem Bildschirm der Arbeitsmaschine nicht mehr zwingend erforderlich; in einem solchen Fall kann die Bildausgabe auch auf der Graphikanzeige eines oder mehrerer Transportfahrzeuge erfolgen. Durch die erfindungsgemäße Anzeige des Videosignals auf einer Graphikanzeige in der Fahrerkabine des Transportfahrzeugs kann der Fahrer auf das ständige Umschauen verzichten, um die Befüllung des Beladungsvorgangs zu beachten, und die Beobachtung ist von oben aus Sicht der Übergabevorrichtung viel besser möglich als vom Fahrersitz des Transportfahrzeugs aus, da die Sicht dort erheblich durch Ladebordwände etc. eingeschränkt ist. Auch bei den Transportfahrzeugen kann auf die Installation eines zusätzlichen Anzeigebildschirms verzichtet werden, was auch hier die Kosten senkt und dem Raumgefühl und der Übersichtlichkeit in der Kabine des Transportfahrzeuges zugute kommt.

Da in den meisten Fällen mehr als ein Transportfahrzeug an einem Arbeitseinsatz beteiligt ist, sind zweckmäßigerweise die Fahrerstände mehrerer oder aller beteiligter Transportfahrzeuge mit je einer Graphikanzeige versehen, die zumindest auch Betriebs- und/oder Kontrolldaten des Transportfahrzeuges anzeigen kann und über Telekommunikationsmittel mit der Überwachungskamera der Arbeitsmaschine, beispielsweise einem Feldhäcksler, einem Mähdrescher oder einer Baumaschine, verbunden. Um die Befüllung des Anhängers über eine Graphikanzeige durch den Fahrer des Transportfahrzeuges kontrollieren zu können, muß bei dervorgeschlagenen Vorrichtung nun nichtmehrjedes einzelne Transportfahrzeug mit einer Überwachungskamera ausgestattet werden, da alle Transportfahrzeuge auf die Überwachungskamera der Arbeitsmaschine zurückgreifen. So zu verfahren hat weiter den Vorteil, daß die in Wartestellung befindlichen Transportfahrzeuge selbst absehen und entscheiden können, zu welchem Zeitpunkt eine Leerfahrzeug starten muß, um das im Moment noch zu beladende Fahrzeug abzulösen, und zwar ohne den eigentlichen Arbeitsvorgang mehr als unbedingt nötig unterbrechen zu müssen.

Anstelle einer Überwachungskamera, die ein analogen Videosignal bereitstellt, kann natürlich auch eine Überwachungskamera eingesetzt werden, die bereits ein digitales Videosignal abgibt. In diesem Fall kann entweder ganz auf den Decoder verzichtet werden, oder es wird ein Decoder eingesetzt, der das digitale Videosignal in ein Standardformat umwandelt, das in einem Busnetz oder den Fahrzeugcomputern weiterverarbeitet werden kann.

In die digital arbeitende Graphikanzeige kann ein Auftreffpunkt eingeblendet sein, der den ungefähren Auftreffpunkt des überladenen Gutes im Bereich des Bildes darstellt, die digitalen oder digitalisierten Videosignale einer Überwachungskamera können von einer Bildauswertungssoftware aufbereitet werden, und auf der digital arbeitenden Graphikanzeige können aus den digitalisierten Videosignalen abgeleitete Vektoren, Eckwinkel, Warn- oder Pfeilsymbole oder sonstige symbolhaften Darstellungen oder Stellbefehlsvorschläge anzeigbar sein. Eine Bildauswertung würde durch die Verwendung einer dreidimensional arbeitenden Videokamera, beispielsweise eine Infrarotkamera, unterstützt, da eine solche Videokamera bessere rechnerisch auswertbare Videosignale liefert. Eine Bildauswertung kann die Relativbewegung der Fahrzeuge zueienander ermitteln und in Stellbefehlsvorschläge umsetzen, die über Bildsignale anzeigbar sind. Wenn eine Bildauswertung abgeleitete Stellbefehlsvorschläge erzeugt, so können diese nach Wahl auch automatisch von der Bordelektronik ausgeführt werden, indem die Bildauswertungssoftware über einen Mikroprozessor entsprechende Stellbefehle abgibt, die an die jeweiligen Aktoren adressiert sind. Eine Bildauswertung kann einer Überwachungskamera oder einem der Überwachungskamera funktionsmäßig verbundenen Mikroprozessor zugeordnet sein, wobei die an das Busnetz oder einen Mikroprozessor ausgegebenen digitalen Videosignale von der Bildauswertung auf Auftreffpunkte, Vorschlagssymbole, Vektoren, Eckwinkel, Warnsymbole oder Pfeilsymbole oder sonstige symbolhafte Darstellungen reduziert ist. Der digital arbeitenden Graphikanzeige können von einem Mikroprozessor symbolhafte Darstellungen und/oder Stellbefehlsvorschläge übermittelt werden, die aus einer Bildauswertung in Verbindung mit der damit verknüpften oder ausschließlichen Auswertung der Sensordaten von optischen, akustischen oder strahlungsemittierenden Sensoren abgeleitet sind.

Im folgenden soll die Erfindung anhand eines Ausführungsbeispiels näher erläutert werden. Es zeigen:
- Figur 1: eine erfindungsgemäß ausgestattete Arbeitsmaschine,
- Figur 2: ein Schaltschema zur Integration des Videosignals in die Bordelektronik,
- Figur 3: ein abgewandeltes Schaltschema, das kein Ausführungsbeispiel der Erfindung zeigt,
- Figur 4: eine mögliche Graphikanzeige in der Arbeitsmaschine oder dem Transportfahrzeug.

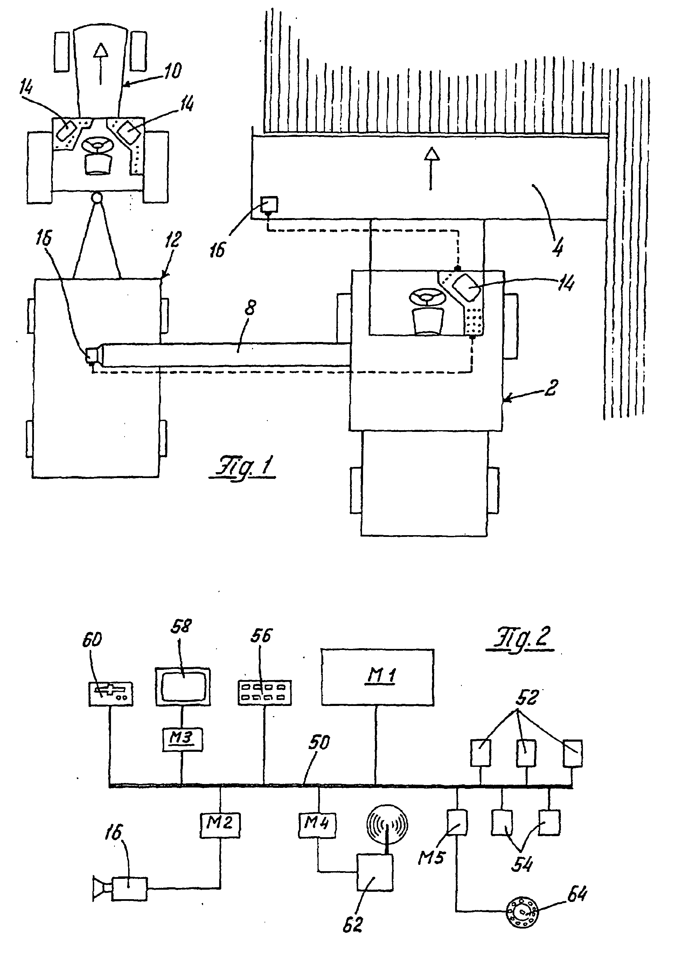

Figur 1 zeigt einen Mädrescher 2, der mit seinem Schneidwerk 4 eine noch nicht abgeerntete Feldfläche 6 abmäht. Aus dem gemähten Erntegut wird das Getreide abgeschieden, gereinigt und nach Zwischenlagerung in einem Korntank über ein Korntankauslaufrohr 8 in ein Transportfahrzeug abgegeben, hier bestehend aus dem Ackerschlepper 10 und dem Anhänger 12. Für die Wirtschaftlichkeit des Einsatzes und die Schlagkraft des Mähdreschers 2 ist es wichtig, daß der Mähdrescher 2 während des Zeitraums des Überladens des ausgedroschenen und gereinigten Getreides auf das Transportfahrzeug 10, 12 nicht anhält, sondern der Überladevorgang während der Fahrt vorgenommen wird. Bei einer Arbeitsmaschine in Form eines Feldhäckslers oder einer Baumaschine wie einer Straßenfräse muß sogar zwangsläufig während der Fahrt überladen werden, da im Zusammenhang mit der Bearbeitung so viel zu überladende Güter anfallen, daß eine Zwischenlagerung nicht sinnvoll möglich ist. Um einen Verlust von zu überladenden Gütern oder eine ungünstige Beladung des Transportfahrzeuges zu vermeiden, müssen die Fahrer des Mähdreschers 2 und des Transportfahrzeugs 10, 12 den Überladevorgang kontrollieren. Für alle beteiligten Fahrer ist die Kontrolle eine schwierige Aufgabe, weil sie ihre Fahrzeuge einerseits vorwärts fahren müssen als auch andererseits nach hinten bzw. zur Seite die Überladung kontrollieren und sich gegenseitig koordinieren müssen, um sowohl eine optimale Beladung sicherzustellen als auch Kollisionen der Fahrzeuge miteinander zu vermeiden. Die Fahrerstände des Mähdreschers 2 und des Transportfahrzeugs 10 sind mit Bedienarmaturen ausgestattet, die neben verschiedenen Schaltern und Tasten auch Bildschirme 14 als Graphikanzeigen aufweisen, mittels derer der Fahrer über Geschwindigkeit, Drehzahlen von Motor und Arbeitsorganen, Einstellungen der Maschine, Serviceintervalle, Bedienhinweise, Arbeitsparameter und sonstiges in graphischen und/oder alphanumerischen Anzeigen informiert wird. Auf den Bildschirmen 14 kann eine oder mehrere Anzeigen dargestellt sein, und das Anzeigebild kann nach Wahl des Fahrers oder automatisch nach Arbeitsfunktion des Mähdreschers 2 oder des Transportfahrzeugs 10 wechseln, um den Anforderungen entsprechende Informationen liefern zu können. Die Bildschirme 14 sind über elektrische oder optische Leiter an die Bordelektronik des Mähdreschers 2 und des Transportfahrzeugs 10 angeschlossen. Die Bordelektronik übermittelt auf an sich bekannte Art und Weise die von der Sensorik ermittelten anzuzeigenden Werte. ÜberTelekommunikationsmittel, die an die Bordelektronik angeschlossen sind, können zudem extern bereitgestellte Informationen auf den Bildschirmen 14 angezeigt werden. Für eine solche Bordelektronik eignet sich in besonderer Weise ein Bussystem, in dem die auszutauschenden Informationen über ein einheitliches Datenformat vom Sender an den Empfänger übermittelt werden. Um den Überladevorgang überwachen zu können, ist am Korntankauslaufrohr eine Überwachungskamera 16 angebracht, die an die Bordelektronik des Mähdreschers 2 angeschlossen ist. Der Mähdrescher 2 verfügt über eine weitere Überwachungskamera 16, die ebenfalls an die Bordelektronik angeschlossen ist und durch die er kontrollieren kann, ob er optimal an der Bestandskante entlangfährt.

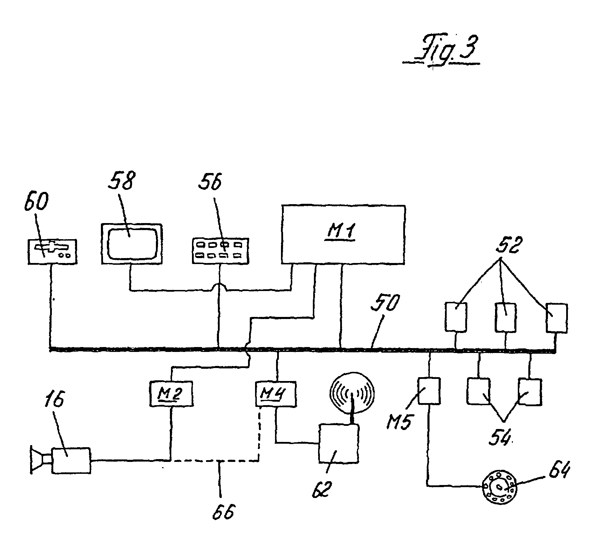

In Figur 2 ist ein Schema gezeigt, das eine mögliche Integration der Überwachungskamera 16 in die Bordelektronik darstellt. Das Hochgeschwindigkeitsnetzwerk in Form eines seriellen Busnetzes 50 wird von dem Busterminal M1 gesteuert, in dem ein Mikroprozessor die Kommunikation der ebenfalls an das (CAN-) Busnetz angeschlossenen weiteren Komponenten der Bordelektronik überwacht. Als weitere Komponenten sind in Figur 2 Sensoren 52, Aktoren 54, eine Bedientastatur 56, eine Graphikanzeige 58, ein CD-Rom- oder sonstige externe Speicher 60, eine Überwachungskamera 16, eine Telekommunikationseinheit 62 und eine (CAN-) Busnetz-Anschlußsteckdose 64 dargestellt. Zwar sind alle genannten Komponenten über einen Mikroprozessor mit dem CAN-Busnetz verbunden, für einige Komponenten sind die jeweiligen Mikroprozessoren jedoch zur näheren Erläuterung als Mikroprozessoren M2 bis M5 besonders dargestellt.

Der Mikroprozessor M2 weist neben Einrichtungen für die Kommunikation mit anderen Mikroprozessoren mindestens einen zusätzlichen Decoder auf, der die analogen Videosignale der Überwachungskamera 16, die im Fernsehstandardformat NTSC, PAL, SECAM oder sonstigen Standardformaten übermittelt werden, digitalisiert. Wahlweise kann der Decoder natürlich auch direkt in die Überwachungskamera 16 integriert sein. Der Decoder, bestehend aus einer geeigneten Hard- und Software, wandelt das analoge Videosignal in ein digitales Standardformat um, das dann von den angeschlossenen Mikroprozessoren M1, M3, M4 und/oder M5 weiterverarbeitet werden kann. Als Standardformat bietet sich hier das PCMCIA-Datenformat an. Wenn die Überwachungskamera 16 bereits digitale Videosignale liefert, kann der Decoder zur Anpassung des Datenformats, beispielsweise auf PCMCIA, eingesetzt werden. Wenn die Überwachungskamera 16 die Videosignale auch schon im passenden Datenformat liefert, kann der Mikroprozessor M2 die Videosignale ohne Umformatierung weitergeben.

Die digitalisierten Videosignale werden vom Mikroprozessor M2 im Rahmen des Datenformates an den Mikroprozessor M3 adressiert, der die Graphikanzeige im Bildschirm 58 steuert. Der Mikroprozessor M3 liest softwaregesteuert aus den übermittelten Datensätzen die digitalisierten Videosignale aus, fügt sie abhängig von der Befehlsvorgabe des Fahrers der Arbeitsmaschine 2 oder des Transportfahrzeugs 10 in den Rahmen der Graphikanzeige ein und übermittelt an den Bildschirm 58 ein elektronisches Bildsignal, das der vom Fahrer gewünschten Graphikanzeige entspricht. Der Mikroprozessor M3 kann dabei über eine direkt angeschlossene Tastatur, die Bedientastatur 56 oder einen entsprechend ausgerüsteten Touch-Screen-Bildschirm 58 mit einer entsprechenden menuegesteuerten Benutzerführung vom Fahrer Anweisungen bekommen, welche Informationen über die Graphikanzeige bereitgestellt werden sollen. Dadurch kann der Fahrer bestimmen, ob er überhaupt eines oder bei mehreren angeschlossenen Überwachungskameras welche Videosignale er angezeigt haben möchte, ob die Videosignale ausschließlich oder zusammen mit anderen Informationen auf der Graphikanzeige dargestellt werden sollen, wie beispielsweise Durchsatz- oder sonstige Leistungsdaten der Arbeitsmaschine 2.

Das in Figur 2 gezeigte Schema paßt nicht nur für eine Arbeitsmaschine 2, sondern in gleicher oder ähnlicher Weise auch für Transportfahrzeuge 10. Der Unterschied bei einem Transportfahrzeug 10 besteht darin, daß das digitalisierte Videosignal nicht vom an die Überwachungskamera 16 angeschlossenen Mikroprozessor M2, sondern vom an die Telekommunikationsmittel 62 angeschlossenen Mikroprozessor M4 bereitgestellt wird. Um das digitalisierte Videosignal für den Mikroprozessor M3 des Transportfahrzeugs 10 bereitstellen zu können, muß der Mikroprozessor M4 des Transportfahrzeugs 10 befehls- und softwaregesteuert über die an ihn angeschlossenen Telekommunikationsmittel 62 eine Kommunikationsverbindung mit den Telekommunikationsmitteln 62 und dem Mikroprozessor M4 der Arbeitsmaschine 2 herstellen. Der Mikroprozessor M4 auf der Arbeitsmaschine 2 muß dann die digitalisierten Videosignale vom Mikroprozessor M2 abfragen und an das Transportfahrzeug 10 übermitteln. Wenn der Mikroprozessor M4 des Transportfahrzeugs 10 das digitalisierte Videosignal vorliegen hat, kann er es in gleicher Weise wie für den Mikroprozessor M2 beschrieben an den Mikroprozessor M3 übermitteln, der dann das digitalisierte Videosignal auf dem Bildschirm 58 zur Anzeige bringt. Neben dem Videosignal einer Überwachungskamera, das über Telekommunikationsmittel und den Mikroprozessor M4 an die Bordelektronik weitergegeben wird, können gleichzeitig zusätzliche Überwachungskameras 16 auf der Arbeitsmaschine 2 oder dem Transportfahrzeug 10 entweder direkt über einen weiteren Mikroprozessor M3 oder, beispielsweise wenn sie auf einem angehängten Fahrzeug installiert ist, über die Signalsteckdose 64 an das Busnetz 50 angeschlossen sein.

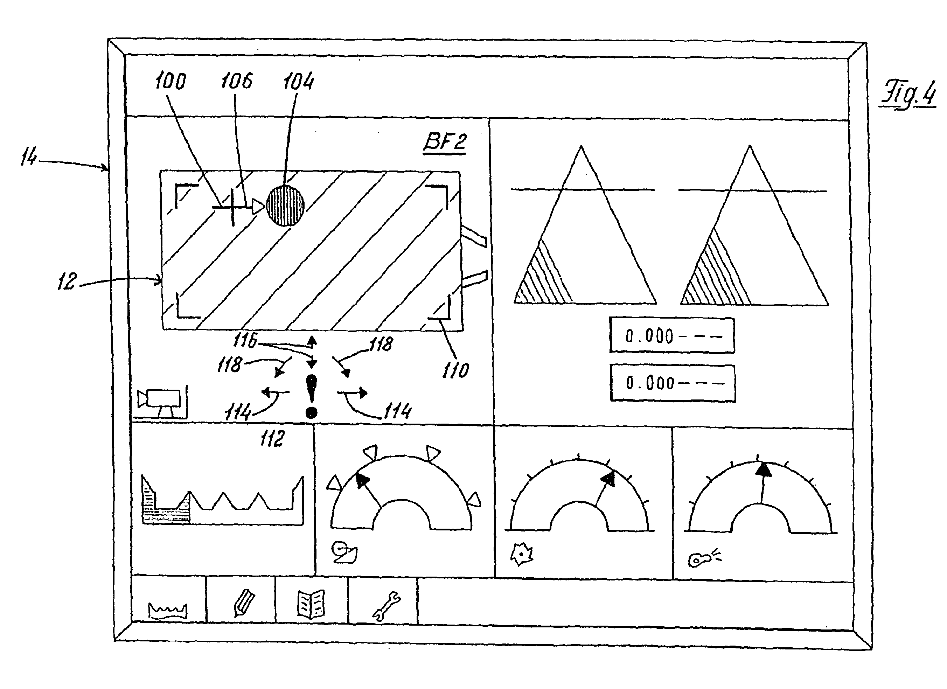

Figur 3 zeigt eine Abwandlung eines Busnetzes 50, in das die digitalisierten Videosignale auf eine andere Weise als in Figur 2 gezeigt eingespeist und zur Anzeige gebracht werden. Die Überwachungskamera 16 ist mit dem Mikroprozessor M2 in Figur 3 nicht über das Busnetz 50, sondern direkt an den Mikroprozessor M1 angeschlossen. Der Mikroprozessor M1 übermittelt die Anzeigesignale an den Bildschirm 58 ebenfalls nicht über das Busnetz 50, sondern direkt. Eine solche Anordnung hat den Vorteil, daß größere Datenmengen übertragen werden können, weil die Übertragung in das Datenformat des Busnetzes 50 entfallen kann. Auch wird das Busnetz 50 selbst weniger belastet. Der Mikroprozessor M2 kann auch in den Mikroprozessor M1 integriert werden, sodaß die Überwachungskamera 16 ein analoges Videosignal an den Mikroprozessor M1 übermittelt. Das anloge oder vom Mikroprozessor M2 bereits digitalisierte Videosignal kann vom Mikroprozessor M1 softwaregesteuert in das Anzeigebild für den Bildschirm 58, das auch andere, vom Busnetz 50 übermittelte Daten enthalten kann, integriert und an den Bildschirm 58 übermittelt werden. Auch kann es vorteilhaft sein, ein analoges Videosignal über die Telekommunikationsmittel 62 zu übermitteln, das dann erst im Bordnetz der empfangenden Maschine 2, 10, 12 digitalisiert wird. Dazu ist die Überwachungskamera 16 über eine Leitung 66 mit dem Mikroprozessor M4 verbunden, über die das analoge Videosignal an den Mikroprozessor M4 übermittelbar und analog von den Telekommunikationsmitteln 62 übertragbar ist.

Figur 4 zeigt beispielhaft eine Graphikanzeige auf dem Bildschirm 58, wie sie prinzipiell bereits aus der DE 43 41 834 bekannt ist. Die Besonderheit besteht hier darin, im Bildfeld BF 2 die digitalen Videosignale einer Überwachungskamera 16 darzustellen. Gut zu erkennen ist die schraffiert dargestellte Ladefläche des Anhängers 12. Der Auftreffpunkt des überladenen Gutes unterhalb der Übergabevorrichtung kann in der Graphikanzeige durch ein Symbol 100 verdeutlicht werden. Dadurch kann der Fahrer der Arbeitsmaschine 2 oder des Transportfahrzeugs 10 schnell erkennen, welcher Bereich des Anhängers 12 von der Überladeeinrichtung gerade befüllt wird.

Neben der bloßen Anzeige des digitalisierten Videosignals auf dem Bildschirm 58 ist es natürlich auch möglich, das Bildsignal durch eine softwaregestützte Bildauswertung, die von den Mikroprozessoren M2 oder M3 vorgenommen werden könnte, mit zusätzlichen Informationen zu versehen. Durch einen Vergleich der Farbwerte der einzelnen Bildpunkte des digitalisierten Videosignals ist es möglich, die Umrisse des Anhängers 12 zu erkennen. Die Umrisse des Anhängers 12 können dann durch in die Graphikanzeige eingespielte Eckwinkel 110, die noch einen Sicherheitsabstand zur Bordwand des Anhängers 12 wahren, verdeutlicht werden. Bei einem Auswandern des Auftreffpunktes 100 aus dem durch die Eckwinkel 110 gekennzeichneten Bereich kann das Warnsysmbol 112, wahlweise auch mit einem akustischen Alarm den Fahrer auf mögliche Überladeverluste hinweisen. Die Elektronik der Bildauswertung kann auch über die Pfeilsymbole 114 vorschlagen, die Fahrgeschwindigkeit zu erhöhen oder zu verlangsamen, über die Pfeilsymbole 116, die Wurfweite der Überladevorrichtung und über die Pfeilsymbole 118, den Verschwenkwinkel der Überladevorrichtung zu verändern. Bei Verwendung eines Bildauswertungssystems braucht der Fahrer die visuellen Informationen nicht mehr selbst in Steuerbefehle an die Übergabevorrichtung oder die von ihm gefahrene Maschine umzusetzen, sondern er braucht nur noch die vorgeschlagenen Stellbefehle auszuführen. Dabei kann vorgesehen werden, daß die Stellbefehle nicht vom Fahrer der Arbeitsmaschine 2, sondern vom Fahrer des Transportfahrzeugs 10 über Telekommunikationsmittel gegeben werden, wenn sich beispielsweise der Fahrer der Arbeitsmaschine voll auf seinen Arbeitsvorgang konzentrieren muß oder will. Bei Verwendung von Vorschlagssysmbolen zur Übergabesteuerung dient die Anzeige der digitalisierten Videosignale der Überwachungskamera 16 dann nur noch der Kontrolle. Anstelle einer Ausführung der Stellbefehle durch den Fahrer ist es natürlich auch möglich, daß die Elektronik der Bildauswertung die Stellbefehle automatisch an die an das CAN-Busnetz 50 angeschlossenen Aktoren 54 der Überladevorrichtung übermittelt.

Um die Datenmenge, die vom Mikroprozessor M2 in das CAN-Busnetz 50 eingespeist wird, zu reduzieren, ist es vorteilhaft, wenn die Elektronik zur Bildauswertung entweder in der Kamera 16 oder im Mikroprozessor M2 angeordnet ist. Die digitalisierten Videosignale der Überwachungskamera 16 können dann von der Software der Bildauswertung entweder auf die Ausgabe der Stellsysmbole 104 - 118, des Vorschlagssysmbols 104 und/oder auf vereinfachte Symboldarstellungen des Anhängers 12 und des Auftreffpunktes 100 reduziert werden. Bei einer solchen Anordnung bräuchten dann nicht mehr die enormen Datenmengen der Videosignale in Echtzeit übertragen werden, sondern nur noch wenige Signale, die die Stellsysmbole ein- oder ausschalten oder die Symboldarstellungen des Anhängers 12 und des Auftreffpunktes 100 ansteuern. Eine solche Reduzierung der digitalisierten Videosignale auf wenige steuerungsrelevante Größen ist insbesondere auch dann vorteilhaft, wenn als Graphikanzeige ein relativ träge reagierender und grobrastiger, dafür aber sehr kostengünstiger schwarz-weiß-Flüssigkristallbildschirm eingesetzt wird.

Es ist auch denkbar, daß die Befüllung nicht nur durch die Überwachungskamera 16 und eine zugehörige Bildauswertung, sondern zusätzlich auch durch optische, akustische oder strahlungsemittierende Sensoren verfolgt wird. Ermittelt eine Software aus den zur Verfügung stehenden Daten der Sensoren, daß es für die Befüllung des Anhängers 12 günstiger wäre, wenn sich der Auftreffpunkt 100 an anderer Stelle des Anhängers befände, so kann in die digitalisierten Videosignale ein Symbol 104 eingefügt werden, das den neuen vorgeschlagenen günstigeren Auftreffpunkt kennzeichnet. Die zur Erreichung des neuen Auftreffpunktes erforderliche relative Positionsänderung der Übergabevorrichtung zum Anhänger 12 kann zusätzlich durch einen Vektor 106 dargestellt werden.

## Patentansprüche

1. Arbeitsmaschine mit einer Vorrichtung zur Überwachung des Überladens von Gütern von der Arbeitsmaschine (2) auf ein Transportfahrzeug (10, 12), insbesondere das Überladen durch eine landwirtschaftliche Erntemaschine, wobei die Arbeitsmaschine (2) mit einer Überladevorrichtung (8) versehen ist und der Überladevorrichtung (8) eine analoge Überwachungskamera (16) zugeordnet ist, die den Überladevorgang filmt und deren Anzeige durch einen im Fahrerstand der Arbeitsmaschine angebrachten Kontrollmonitor (14) erfolgt,
**dadurch gekennzeichnet,**
**dass** an die Überwachungskamera (16) ein Mikroprozessor (M2) angeschlossen ist, der das Videosignal digitalisiert und an einen weiteren Mikroprozessor (M1 oder M3) übermittelt, welcher das digitalisierte Videosignal auf dem Kontrollmonitor (14) zur Anzeige bringt, der als eine digital arbeitende Graphikanzeige (58) ausgebildet ist. und wobei der Kontrollmonitor (14) und der weitere Mikroprozessor (M1 oder M3) Bestandteil eines in die Arbeitsmaschine (2) integrierten Busnetzes (50) sind und der Mikroprozessor zudem das digitalisierte videosignal an das Datenformat des Busnetzes (50) anpasst.

2. Überwachungsvorrichtung nach Anspruch 1,
**dadurch gekennzeichnet,**
**daß** auf der digital arbeitenden Graphikanzeige (58) zumindest auch Betriebs-und/oder Kontrolldaten der Arbeitsmaschine (2) anzeigbar sind.

3. Überwachungsvorrichtung nach Anspruch 1 oder 2,
**dadurch gekennzeichnet,**
**daß** der Mikroprozessor M2 das digitalisierte Videosignal der Überwachungskamera (16) in ein Standardformat auf der Basis eines digitalen Parallelbusses eines Bordcomputers der Arbeitsmaschine (2) überträgt.

4. Überwachungsvorrichtung nach Anspruch 3,
**dadurch gekennzeichnet,**
**daß** der digitale Parallelbus ein sogenannter PCMCIA-Anschluß ist.

5. Überwachungsvorrichtung nach einem oder mehreren der Ansprüche 1 oder 4,
**dadurch gekennzeichnet,**
**daß** das digitalisierte Videosignal in einem Fenster der digital arbeitenden Graphikanzeige (58) anzeigbar ist.

6. Überwachungsvorrichtung nach einem oder mehreren der Ansprüche 1 bis 5,
**dadurch gekennzeichnet,**
**daß** auf der digital arbeitenden Graphikanzeige (58) ein digitalisiertes Videosignal, das aus Videosignalen von mehreren Überwachungskameras (16) ausgewählt ist, oder mehrere digitaliserte Videosignale von mehreren Überwachungskameras (16) in Fenstern (BF1 - BF(n)) angezeigt sind.

7. Überwachungsvorrichtung nach einem oder mehreren der Ansprüche 1 bis 6,
**dadurch gekennzeichnet,**
**daß** der Mikroprozessor M3 mit einer standardisierten Schnittstelle ausgerüstet ist, die neben den digitaliserten Videosignalen auch Sensor- und/oder Betriebsdaten der Arbeitsmaschine (2) an die digital arbeitende Graphikanzeige (58) übermittelt.

8. Überwachungsvorrichtung nach einem oder mehreren der Ansprüche 1 bis 7,
**dadurch gekennzeichnet,**
**daß** die analogen oder digitalen Videosignale der Überwachungskamera (16) an einen im Mikroprozessor M1 oder M3 direkt angeschlossenen oder integrierten Mikroprozessor M2 und/oder den Mikroprozessor M4 übertragbar sind.

9. Überwachungsvorrichtung nach einem oder mehreren der Ansprüche 1 bis 8,
**dadurch gekennzeichnet,**
**daß** die Bordelektronik der Arbeitsmaschine die digitalisierten Videosignale über Telekommunikationsmittel (62) an eines odermehrere der Transportfahrzeuge (10, 12) übermittelt, die Telekommunikationsmittel (62) eines Transportfahrzeugs (10, 12) die digitalisierten Videosignale der Bordelektronik bereitstellen und die Anzeige der digitalisierten Videosignale auf einer digital arbeitenden Graphikanzeige (58) eines Transportfahrzeugs (10, 12) erfolgt.

10. Überwachungsvorrichtung nach Anspruch 9,
**dadurch gekennzeichnet,**
**daß** eine Überwachungsvorrichtung auf einem Transportfahrzeug (10, 12) den Ansprüchen 2 bis 7 entsprechend aufgebaut und ausgelegt ist.

11. Überwachungsvorrichtung nach Anspruch 9 oder 10,
**dadurch gekennzeichnet,**
**daß** die Bedienelektronik des Transportfahrzeugs (10, 12) über einen Touch-Screen-Bildschirm mit graphischer Benutzeroberfläche, eine Tastatur oder sonstige Eingabemittel verfügt, von denen aus die Stellbefehle des Fahrers des Transportfahrzeugs (10, 12) an die Übergabevorrichtung (8) der Arbeitsmaschine (2) mithilfe der Telekommunikationsmittel (62) an die Bordelektronik der Arbeitsmaschine (2) zur Ausführung übertragbar sind.

12. Überwachungsvorrichtung nach einem oder mehreren der Ansprüch 1 bis 11,
**dadurch gekennzeichnet,**
**daß** die Überwachungskamera (16) ein digitales Videosignal bereitstellt.

13. Überwachungsvorrichtung nach Anspruch 12,
**dadurch gekennzeichnet,**
**daß** das digitale Videosignal einer Überwachungskamera (16) von einem Decoder in ein für ein Busnetz oder die Fahrzeugcomputer geeignetes Standardformat umgewandelt wird.

14. Überwachungsvorrichtung nach einem oder mehreren der Ansprüche 8 bis 13,
**dadurch gekennzeichnet,**
**daß** das digitale Videosignal auf zumindest einem Transportfahrzeug (10, 12) angezeigt wird.

15. Überwachungsvorrichtung nach einem oder mehreren der Ansprüche 1 bis 14,
**dadurch gekennzeichnet,**
**daß** auf der digital arbeitenden Graphikanzeige (58) ein Auftreffpunkt (100) des überladenen Gutes angezeigt ist.

16. Überwachungsvorrichtung nach einem oder mehreren der Ansprüche 1 bis 15,
**dadurch gekennzeichnet,**
**daß** die digitalen oder digitalisierten Videosignale einer Überwachungskamera (16) von einer Bildauswertungssoftware aufbereitet werden.

17. Überwachungsvorrichtung nach einem oder mehreren der Ansprüche 1 bis 16,
**dadurch gekennzeichnet,**
**daß** auf der digital arbeitenden Graphikanzeige aus den digitalisierten Bildsignalen abgeleitete Vektoren (106), Eckwinkel (110), Warnsymbole (112), Pfeilsymbole (114, 116, 118) oder sonstige symbolhafte Darstellungen oder Stellbefehlsvorschläge anzeigbar sind.

18. Überwachungsvorrichtung nach Anspruch 16 oder 17,
**dadurch gekennzeichnet,**
**daß** die aus der Bildauswertung abgeleiteten Stellbefehlvorschläge automatisch von der Bordelektronik ausführbar sind.

19. Überwachungsvorrichtung nach einem oder mehreren der Ansprüche 16 bis 18,
**dadurch gekennzeichnet,**
**daß** die Bildauswertung der Überwachungskamera (16) und/oder dem Mikroprozessor (M2) zugeordnet ist und die vom Mikroprozessor (M2) an das Busnetz oder einen Mikroprozessor M1 ausgegebenen digitalen Videosignale von der Bildauswertung auf Auftreffpunktsymbole (100), Vorschlagssysmbole (104), Vektoren (106), Eckwinkel (110), Warnsymbole (112) oder Pfeilsymbole (114, 116, 118) oder sonstige symbolhafte Darstellungen reduziert ist.

20. Überwachungsvorrichtung nach einem oder mehreren der Ansprüche 16 bis 19,
**dadurch gekennzeichnet,**
**daß** der digital arbeitenden Graphikanzeige von einem Mikroprozessor symbolhafte Darstellungen und/oder Stellbefehlsvorschläge übermittelt werden, die aus einer Bildauswertung in Verbindung mit der damit verknüpften oder ausschließlichen Auswertung der Sensordaten von optischen, akustischen oder strahlungsemittierenden Sensoren abgeleitet sind.

## Claims

1. A working machine having an apparatus for monitoring transloading of products from the working machine (2) on to a transport vehicle (10, 12), in particular transloading by an agricultural harvester, wherein the working machine (2) is provided with a transloading device (8) and associated with the transloading device (8) is an analog monitoring camera (16) which films the transloading procedure and the display of which is effected by a control monitor (14) mounted in the driving position of the working machine, **characterised in that** connected to the monitoring camera (16) is a microprocessor (M2) which digitises the video signal and transmits it to a further microprocessor (M1 or M3) which displays the digitised video signal on the control monitor (14) which is in the form of a digitally operating graphic display (58), and wherein the control monitor (14) and the further microprocessor (M1 or M3) are a component part of a bus network (50) integrated into the working machine (2) and the microprocessor also adapts the digitised video signal to the data format of the bus network (50).

2. A monitoring apparatus according to claim 1 **characterised in that** at least operating and/or control data of the working machine (2) can also be displayed on the digitally operating graphic display (58).

3. A monitoring apparatus according to claim I or claim 2 **characterised in that** the microprocessor (M2) transfers the digitised video signal of the monitoring camera (16) into a standard format on the basis of a digital parallel bus of an on-board computer of the working machine (2).

4. A monitoring apparatus according to claim 3 **characterised in that** the digital parallel bus is a so-called PCMCIA connection.

5. A monitoring apparatus according to one or more of claims 1 and 4 **characterised in that** the digitised video signal can be displayed in a window of the digitally operating graphic display (58).

6. A monitoring apparatus according to one or more of claims 1 to 5 **characterised in that** the digitally operating graphic display (58) displays a digitised video signal which is selected from video signals from a plurality of monitoring cameras (16) or a plurality of digitised video signals from a plurality of monitoring cameras (16) in windows (BF1 - BF(n)).

7. A monitoring apparatus according to one or more of claims 1 to 6 **characterised in that** the microprocessor M3 is equipped with a standardised interface which besides the digitised video signals also transmits sensor and/or operating data of the working machine (2) to the digitally operating graphic display (58).

8. A monitoring apparatus according to one or more of claims 1 to 7 **characterised in that** the analog or digital video signals of the monitoring camera (16) can be transmitted to a microprocessor M2 directly connected or integrated in the microprocessor M1 or M3 and/or to the microprocessor M4.

9. A monitoring apparatus according to one or more of claims 1 to 8 **characterised in that** the on-board electronics of the working machine communicates the digitised video signals by way of telecommunication means (62) to one or more of the transport vehicles (10, 12), the telecommunication means (62) of a transport vehicle (10, 12) supplies the digitised video signals to the on-board electronics and the display of the digitised video signals is effected on a digitally operating graphic display (58) of a transport vehicle (10, 12).

10. A monitoring apparatus according to claim 9 **characterised in that** a monitoring apparatus is constructed and installed on a transport vehicle (10, 12) in accordance with claims 2 to 7.

11. A monitoring apparatus according to claim 9 or claim 10 **characterised in that** the operating electronics of the transport vehicle (10, 12) has a touchscreen with graphical user interface, a keyboard or other input means, from which the control commands of the driver of the transport vehicle (10, 12) to the transfer device (8) of the working machine (2) can be transmitted by means of the telecommunications means (62) to the on-board electronics of the working machine (2) for execution.

12. A monitoring apparatus according to one or more of claims 1 to 11 **characterised in that** the monitoring camera (16) provides a digital video signal.

13. A monitoring apparatus according to claim 12 **characterised in that** the digital video signal of a monitoring camera (16) is converted by a decoder into a standard format suitable for a bus network or the vehicle computers.

14. A monitoring apparatus according to one or more of claims 8 to 13 **characterised in that** the digital video signal is displayed on at least one transport vehicle (10, 12).

15. A monitoring apparatus according to one or more of claims 1 to 14 **characterised in that** an impingement point (100) of the transloaded material is displayed on the digitally operating graphic display (58).

16. A monitoring apparatus according to one or more of claims 1 to 15 **characterised in that** the digital or digitised video signals of a monitoring camera (16) are processed by an image evaluation software.

17. A monitoring apparatus according to one or more of claims 1 to 16 **characterised in that**, derived from the digitised image signals, vectors (106), corner angles (110), warning symbols (112), arrow symbols (114, 116, 118) or other symbol representations or control command proposals can be displayed on the digitally operating graphic display.

18. A monitoring apparatus according to claim 16 or claim 17 **characterised in that** the control command proposals which are derived from the image evaluation operation can be automatically executed by the on-board electronics.

19. A monitoring apparatus according to one or more of claims 16 to 18 **characterised in that** image evaluation is associated with the monitoring camera (16) and/or the microprocessor (M2) and the digital video signals outputted by the microprocessor (M2) to the bus network or a microprocessor M1 are reduced by the image evaluation procedure to impingement point symbols (100), proposal symbols (104), vectors (106), corner angles (110), warning symbols (112) or arrow symbols (114, 116, 118) or other symbol representations.

20. A monitoring apparatus according to one or more of claims 16 to 19 **characterised in that** the digitally operating graphic display is supplied by a microprocessor with symbol representations and/or control command proposals which are derived from an image evaluation procedure in conjunction with evaluation, linked thereto or exclusive, of the sensor data from optical, acoustic or radiation-emitting sensors.

## Revendications

1. Dispositif de surveillance du transbordement de produits de la machine de travail (2) vers un véhicule de transport (10, 12), en particulier du transbordement effectué par une machine agricole de récolte, la machine de travail (2) étant équipée d'un dispositif de transbordement (8) et une caméra de surveillance (16) analogique étant associée au dispositif de transbordement (8), laquelle caméra filme le processus de transbordement qui est ensuite visualisé sur un moniteur de contrôle (14) installé dans la cabine de conduite de la machine de travail, **caractérisé en ce qu'**un microprocesseur (M2) est connecté à la caméra de surveillance (16), lequel microprocesseur numérise le signal vidéo et le transmet à un microprocesseur (M1 ou M3) supplémentaire, qui assure l'affichage du signal vidéo numérisé sur le moniteur de contrôle (14) agencé en afficheur graphique (58) numérique, le moniteur de contrôle (14) et le microprocesseur (M1 ou M3) supplémentaire faisant partie d'un réseau de bus (50) intégré dans la machine de travail (2) et le microprocesseur adaptant en outre le signal vidéo numérisé au format de données du réseau de bus (50).

2. Dispositif de surveillance selon la revendication 1, **caractérisé en ce qu'**au moins des données de fonctionnement et/ou de contrôle de la machine de travail (2) peuvent être également affichées sur l'afficheur graphique (58) numérique.

3. Dispositif de surveillance selon la revendication 1 ou 2, **caractérisé en ce que** le microprocesseur M2 transmet le signal vidéo numérisé de la caméra de surveillance (16) dans un format standard sur la base d'un bus parallèle numérique d'un ordinateur de bord de la machine de travail (2).

4. Dispositif de surveillance selon la revendication 3, **caractérisé en ce que** le bus parallèle numérique est une connexion de type PCMCIA.

5. Dispositif de surveillance selon une ou plusieurs des revendications 1 à 4, **caractérisé en ce que** le signal vidéo numérisé peut être affiché dans une fenêtre de l'afficheur graphique (58) numérique.

6. Dispositif de surveillance selon une ou plusieurs des revendications 1 à 5, **caractérisé en ce qu'**un signal vidéo numérisé, sélectionné parmi les signaux vidéo de plusieurs caméras de surveillance (16) ou plusieurs signaux vidéo numérisés de plusieurs caméras de surveillance (16) sont affichés dans des fenêtres (BF1-BF(n)) sur l'afficheur graphique (58) numérique.

7. Dispositif de surveillance selon une ou plusieurs des revendications 1 à 6, **caractérisé en ce que** le microprocesseur M3 est équipé d'une interface standardisée qui transmet, outre les signaux vidéo numérisés, également des données de détecteurs et/ou de fonctionnement de la machine de travail (2) à l'afficheur graphique (58) numérique.

8. Dispositif de surveillance selon une ou plusieurs des revendications 1 à 7, **caractérisé en ce que** les signaux vidéo analogiques ou numériques de la caméra de surveillance (16) peuvent être transmis à un microprocesseur M2 et/ou au microprocesseur M4 connecté directement au ou intégré dans le microprocesseur M1 ou M3.

9. Dispositif de surveillance selon une ou plusieurs des revendications 1 à 8, **caractérisé en ce que** l'électronique de bord de la machine de travail transmet les signaux vidéo numérisés par des moyens de télécommunications (62) à un ou plusieurs des véhicules de transport (10, 12), **en ce que** les moyens de télécommunications (62) d'un véhicule de transport (10, 12), déli vrent les signaux vidéo numérisés à l'électronique de bord et **en ce que** les signaux vidéo numérisés sont affichés sur un afficheur graphique (58) numérique d'un véhicule de transport (10,

10. Dispositif de surveillance selon la revendication 9, **caractérisé en ce qu'**un dispositif de surveillance est installé et agencé sur un véhicule de transport (10, 12), conformément aux revendications 2 à 7.

11. Dispositif de surveillance selon la revendication 9 ou 10, **caractérisé en ce que** l'électronique d'utilisation du véhicule de transport (10, 12) dispose d'un écran tactile à interface utilisateur graphique, d'un clavier ou de moyens d'entrée autres, à partir desquels les ordres de réglage du conducteur du véhicule de transport (10, 12) destinés au dispositif de transbordement (8) de la machine de travail (2) peuvent être transmis, en vue de leur exécution, à l'électronique de bord de la machine de travail (2), à l'aide des moyens de télécommunications (62).

12. Dispositif de surveillance selon une ou plusieurs des revendications 1 à 11, **caractérisé en ce que** la caméra de surveillance (16) délivre un signal vidéo numérique.

13. Dispositif de surveillance selon la revendications 12, **caractérisé en ce que** le signal vidéo numérique d'une caméra de surveillance (16) est converti par un décodeur en un format standard adapté pour un réseau de bus ou l'ordinateur du véhicule.

14. Dispositif de surveillance selon une ou plusieurs des revendications 8 à 13, **caractérisé en ce que** le signal vidéo numérique est affiché sur au moins un véhicule de transport (10, 12).

15. Dispositif de surveillance selon une ou plusieurs des revendications 1 à 14, **caractérisé en ce qu'**un point d'arrivée (100) du produit transbordé est affiché sur l'afficheur graphique (58) numérique.

16. Dispositif de surveillance selon une ou plusieurs des revendications 1 à 15, **caractérisé en ce que** les signaux vidéo numériques ou numérisés d'une caméra de surveillance (16) sont traités par un logiciel de traitement d'images.

17. Dispositif de surveillance selon une ou plusieurs des revendications 1 à 16, **caractérisé en ce que** des vecteurs (106), des angles (110), des symboles d'avertissement (112), des flèches (114, 116, 118), ou d'autres indications sous forme de symboles, ou des propositions d'ordres de réglage, dérivés des signaux vidéo numérisés, peuvent être affichés sur l'afficheur graphique (58) numérique.

18. Dispositif de surveillance selon la revendication 16 ou 17, **caractérisé en ce que** les propositions d'ordres de réglage, dérivées du traitement des images peuvent être exécutées automatiquement par l'électronique de bord.

19. Dispositif de surveillance selon une ou plusieurs des revendications 16 à 18, **caractérisé en ce que** le traitement des images est associé à la caméra de surveillance (16) et/ou au microprocesseur M2 et que les signaux vidéo numériques délivrés par le processeur M2 au réseau de bus ou à un microprocesseur M1 sont réduits par le traitement d'images à des symboles de point d'arrivée (100), des symboles de proposition (104), des vecteurs (106), des angles (110), des symboles d'avertissement (112) ou des symboles flèches (114, 116, 118) ou d'autres indications sous forme de symboles.

20. Dispositif de surveillance selon une ou plusieurs des revendications 16 à 19, **caractérisé en ce que** des indications sous forme de symboles et/ou des propositions d'ordres de réglage, dérivées du traitement d'images combiné au traitement associé ou isolé des données provenant de détecteurs optiques, acoustiques ou à rayonnement, sont transmises par un microprocesseur à l'afficheur graphique numérique.
